# EUROPÄISCHE PATENTANMELDUNG

(11) **EP 0 553 661 A1**
(43) Veröffentlichungstag der Anmeldung: **04.08.1993**
(21) Anmeldenummer: 93100547.4
(22) Anmeldetag: 15.01.1993
(51) Int. Cl.: G01B 3/20, G01B 3/00

(54) **Längenmessgerät**

(30) Priorität: 27.01.1992 CH 217/92
(71) Anmelder: Meyer, Hans, CH-1020 Renens (CH)
(72) Erfinder: Meyer, Hans, CH-1020 Renens (CH)
(74) Vertreter: ARDIN & CIE S.A.

(57) **Zusammenfassung**

Das Längenmessgerät umfasst eine Schiene (1) mit einem festen Messschnabel (4) und einen Schieber (5) mit einem beweglichen Messschnabel (6). Ein Halteteil (9) mit einem Griffloch (10) ist auf der Schiene (1) verstellbar angebracht. Der Schieber (5) weist einen in ihm verschiebbar angeordneten Ring (20) auf. Dieser steht über Verbindungsorgane (36,39) mit einem Klemmstück (30) in Verbindung. Dieses Klemmstück wird nach Erreichen eines vorbestimmten Messdruckes auf der Schiene (1) in Klemmstellung gebracht und erlaubt somit das Einhalten eines konstanten Messdrucks, wobei der Schieber (5) bei verriegeltem Klemmstück (30) unter Einwirkung der Feder (32) gegenüber dem Klemmstück (30) verschoben werden kann, wodurch ein Einspielen des Messobjektes in die präzise Messlage unter Federkraft ermöglicht wird. Die Anordnung von Griffloch (10) und Ring (20) bietet den Vorteil, dass präziseste Messungen rasch gemäss einer scherenartigen Bedienung des Gerätes vorgenommen werden können.

## Beschreibung

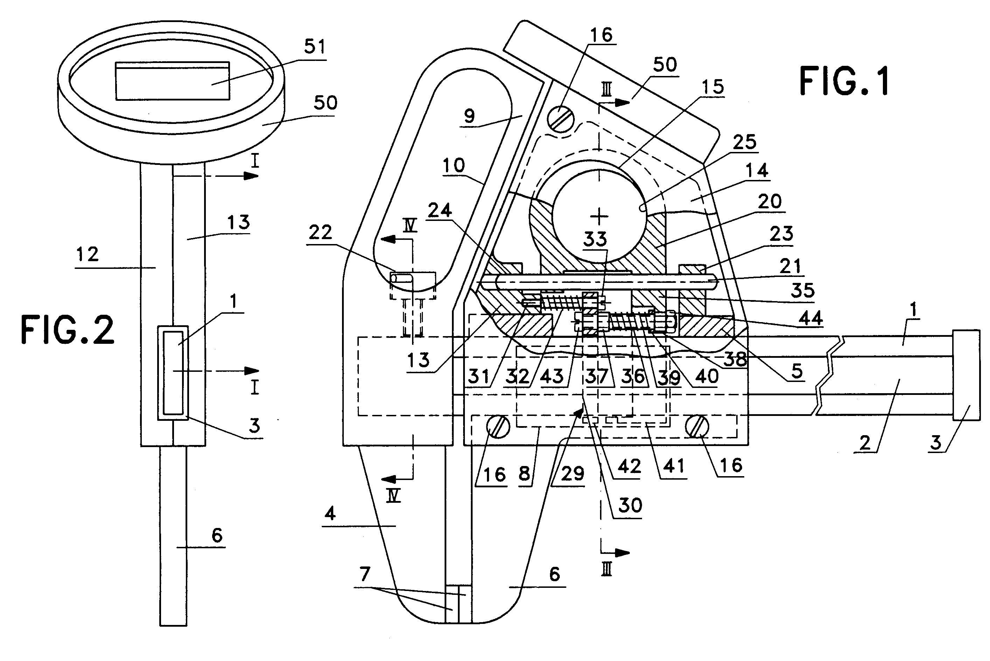

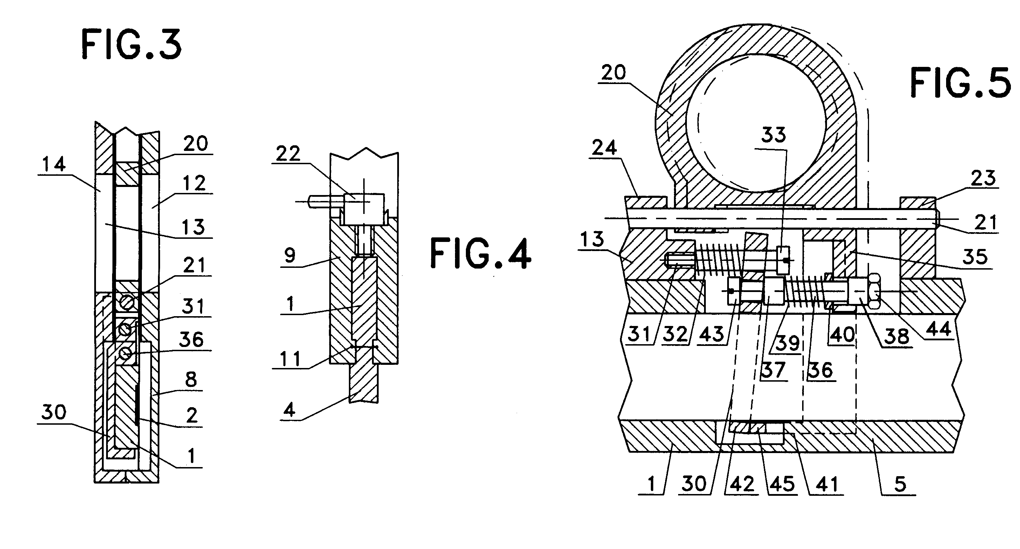

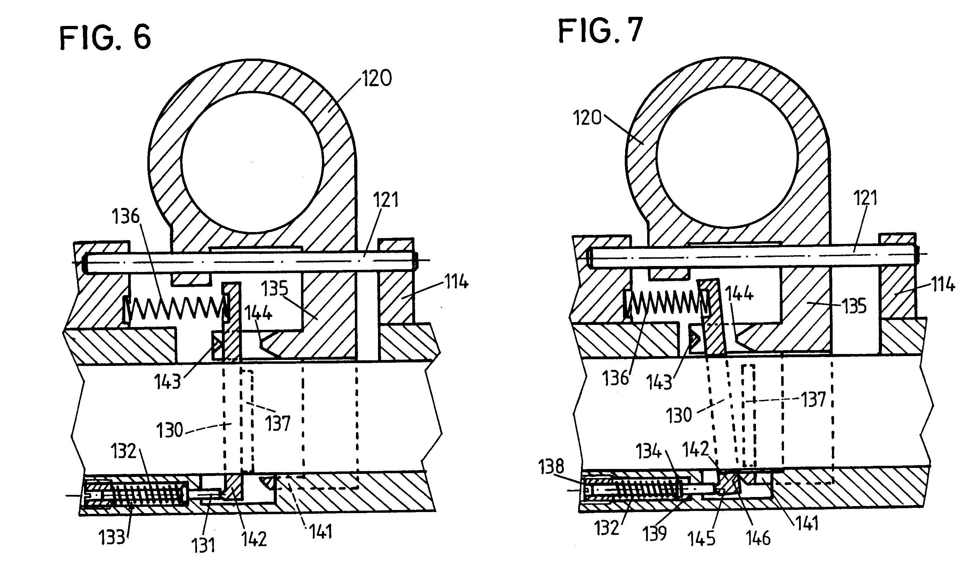

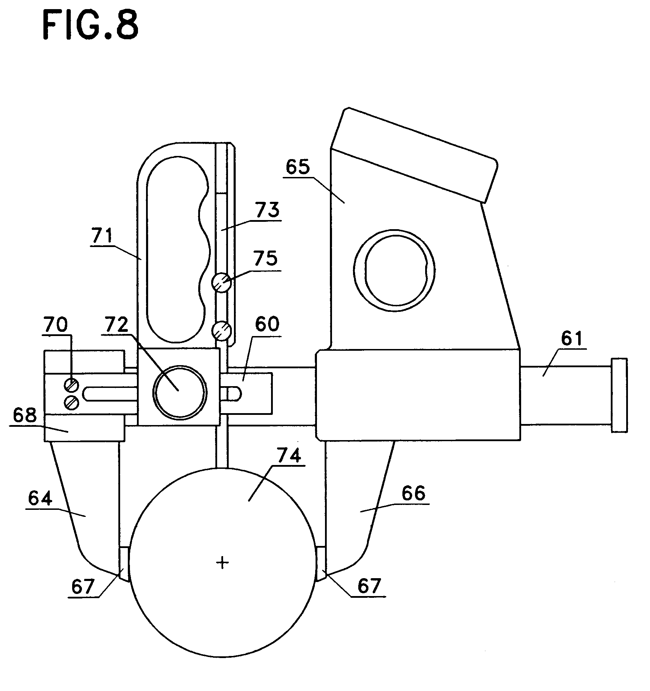

Die Erfindung bezieht sich auf ein Längenmessgerät bestehend aus einer Schiene, auf welcher ein Schieber verstellbar angeordnet ist, wobei die Schiene und der Schieber mit Messschnäbeln versehen sind, und die Schiene mit einem zumindest ein Griffloch aufweisenden Halteteil und der Schieber mit einem Ringgriff versehen ist, und wobei der Schieber mit einer auf die Schiene einwirkenden Klemmvorrichtung ausgerüstet ist, und der Ringgriff mit der Klemmvorrichtung zu deren Betätigung in Verbindung steht.
Ein derartiges Gerät ist zum Beispiel in der DE 33.35.743.A1 beschrieben. Dieses Gerät eignet sich jedoch nicht für Messungen mit einer sehr hohen Genauigkeit.
Im Laufe der neueren Zeit wurden Messgeräte, insbesondere Messschieber, weiter entwickelt, so dass man heute Messaufnehmer mit einer Messauflösung in der Grössenordnung von 1/1000 mm geschaffen hat. Dies bedeutet, dass den Fehlereinflüssen, die beim Messen auftreten, erhöhte Aufmerksamkeit zu schenken ist.
Längemessgeräte wie Messschieber biegen sich unter dem Einfluss der Messkräfte und sind deshalb auf Messdruck-Variationen sehr empfindlich. Es liegt im Interesse der Messgenauigkeit, wenn deshalb der Messdruck möglichst, konstant gehalten und der Messvorgang dem Gefühl des Messenden möglichst entzogen wird. Dies zu erreichen, wurden Lösungen vorgeschlagen wie z.B. in DE 335743-A1 oder US 4.873.771 beschrieben. In beiden Fällen handelt es sich um Instrumente zum Messen von Abständen. Der Einfluss des Messenden wird dadurch ausgeschaltet, dass, nachdem beim Aufsetzen der Messschnäbel ein gewisser Messdruck erreicht wird, die Schnäbel gegenseitig blockiert werden, so dass sie auf äussere Einwirkungen nicht mehr reagieren.
Nun ist es aus der Messpraxis bekannt, dass ein Messgerät beim ersten Aufsetzen meist noch nicht die ideale Messposition einnimmt, was unter anderem davon abhängt, wie das Gerät gehandhabt wird. Unter Aufrechterhaltung des Messdruckes ist es dann möglich, das Gerät durch eine lockerere Haltung, kleinere Bewegungen oder Vibrationen in die definitive Messlage zu bringen und so genaue Messresultate zu erzielen. Bei den vorgenannten Geräten jedoch sind solche korrigierende Massnahmen ausgeschlossen, da ja die Messarme beim ersten Aufsetzen blockiert werden.
Es ist zudem bekannt, dass sich Messscheiber schlecht für gewisse, oft vorkommende Messaufgaben eignen. Dies trifft zu bei im Bearbeitungsprozess befindlichen oder zur Kontrolle eingespannten Werkstücken. Es ist die Aufgabe der Erfindung, den bevorstehend genannten Nachteilen abzuhelfen. Sie wird dadurch gelöst, dass der Ringgriff in einem Gehäuse verstellbar angeordnet ist und dass die Klemmvorrichtung ein zwischen Gehäuse und Ringgriff gelagertes zumindest zum Teil um die Schiene greifendes Klemmstück aufweist, das sich bei Vorschub des Ringgriffes und Auftreten einer vorbestimmten Messkraft durch Schrägstellung auf der Schiene festklemmt und das über eine die Messkraft bestimmende Feder mit dem Gehäuse derart verbunden ist, dass der Schieber bei festgeklemmtem Klemmstück unter Einwirkung der Feder gegenüber dem Klemmstück verschiebbar angeordnet ist, um sich unter Federkraft in die präzise Messlage einzuspielen.
Das erfindungsgemässe Gerät bietet dadurch den Vorteil, in einem Gerät grösste Messgenauigkeit und gleichzeitig besten Messkomfort zu vereinen.
Vorteilhafterweise stimmt die Ringöffnung des Ringgriffes mit einer im Gehäuse ausgesparten Fingeröffnung überein, so dass der bedienende Finger gleichzeitig das Gerät hält.
Dies erlaubt eine sehr sichere und bequeme Handhabung und eine einfache Konstruktion des Gerätes.
Eine Ausführungsform ist dadurch gekennzeichnet, dass das Klemmstück an einer im Gehäuse eingesetzten Schraube aufgehängt ist, wobei die die Messkraft bestimmende Feder das Klemmstück gegen den Kopf der Schraube drückt, und wobei in der Messlage ein Spiel zwischen Klemmstück und Kopf besteht, welches es erlaubt, dass sich der Schieber unter Druck der Feder in die präzise Messlage einspielen kann.
Diese Konstrucktionsweise ist besonders einfach und erlaubt ein gutes Einspielen des Schiebers in die präzise Messlage.
Gemäss einer bevorzugten Ausführungsform wirkt die die Messkraft bestimmende Feder über einen im Gehäuse gelagerten Bolzen auf einen Teil des Klemmstückes, der sich auf der vom Ringgriff abgewandten Seite des Klemmstückes befindet.
Diese Anordung ermöglicht ein sicheres Verriegeln des Klemmstückes und eine optimale Kraftverteilung bei der Betätigung des Gerätes.
Vorteilhafterweise weist der Ringgriff dabei eine Verlängerung auf, welche in gegenüber dem Bolzen entgegengesetzter Richtung, in zum Ringgriff hin versetzter Weise auf das benannte Endstück derart wirkt, dass bedingt durch ein auf das Klemmstück wirkendes Drehmoment bei Erreichen eines vorbestimmten Messdruckes das Klemmstück in Schrägstellung auf der Schiene verriegelt wird.
Es kann weiterhin vorteilhaft sein, dass das Gehäuse mit einem zweiten Anschlag versehen ist, gegen welchen das Klemmstück in entriegeltem Zustand merklich senkrecht zur Schiene federnd gedrückt wird. Eine solche Anordnung erlaubt ein leichtes Verschieben des Schiebers in entriegeltem Zustand.
Schliesslich kann es von Vorteil sein, dass der das Griffloch aufweisende Halteteil auf der Schiene oder auf einer zur Schiene parallel befestigten Führungsleiste verstellbar angeordnet ist. Eine solche Anordnung ermöglicht ein bequemes Messen von grösseren und kleineren Messobjekten mit demselben Gerät.
Weitere Einzelheiten, Merkmale und Vorteile ergeben sich aus den abhängigen Patentansprüchen und der nachfolgenden Beschreibung eines in der beigefügten Zeichnung dargestellten Ausführungsbeispiels und zweier Varianten davon.
Es zeigen:
- Figur 1:: eine Seitenansicht des Längenmessgerätes mit teilweisem Schnitt nach der Ebene 1-1 in Figur 2,
- Figur 2:: eine stirnseitige Ansicht,
- Figur 3:: ein Teilquerschnitt gemäss der Linie III-III in Figur 1,
- Figur 4:: ein Teilschnitt gemäss der Linie IV-IV in Figur 1,
- Figur 5:: ein Teillängsschnitt des in Figur 1 abgebildeten Gerätes in Messstellung,
- Figur 6:: ein Teillängsschnitt einer Variante in Ruhestellung,
- Figur 7:: ein Teillängsschnitt der Variante bei Einfahren in die Messstellung,
- Figur 8:: eine Seitenansicht einer zweiten Variante.
Das Längenmessgerät gemäss den Figuren 1-5 besteht aus einer Schiene 1, auf welcher ein fester Messschnabel 4 in bekannter Weise befestigt ist, während sich der bewegliche Messschnabel 6 auf einem Schieber 5 befindet. Die Messschnäbel 4 und 6 sind mit Messkontakten 7 ausgerüstet. Auf der Schiene 1 ist ein Masstab 2 vorgesehen, welcher durch eine im Schieber aufgenommene Ableseeinheit 8 (Figur 3) herkömmlicher Bauart, wie zum Beispiel in EP 0053091 beschrieben, abgelesen wird. Am Ort des festen Messschnabels 4 ist auf der Schiene 1 ein Halteteil 9 mit Griffloch 10 mittels einer Schraube 22 befestigt.
Der Halteteil 9 greift, wie in Figur 4 gezeigt mit zwei Armen 11 um die Schiene 1 herum, was bewirkt, dass er auf letzterer beliebig verschoben und mit der Schraube 22 festgehalten werden kann. Dadurch kann der Messbereich der Lehre, welcher durch die Oeffnung der Hand beschränkt ist, durch Verschieben des Halteteils 9 beliebig erweitert werden. Ein aus zwei Hälften 12 und 13 bestehendes Gehäuse 14, in welchem sich Oeffnungen 15 befinden, ist auf dem Schieber 1 mittels 3 Schrauben 16 befestigt. Im Innern des aus den Hälften 12 und 13 bestehenden Gehäuses 14 befindet sich ein als Ring 20 ausgebildeter Ringgriff, in welchem eine Achse 21 aufgenommen ist, welche sich in Lagern 23 und 24 im Längssinne bewegen kann. Die im Halteteil 9 und dem Ring 20 vorgesehenen Oeffnungen 10 und 25 dienen zur Einführung der Finger entweder der rechten oder der linken Hand und erlauben die Vor- und Rückstellung des Schiebers 5 nach Scherenart. Die Ringöffnung 15 des Rings 20 stimmt mit den Oeffnungen 15 des Gehäuses überein, so dass der bedienende Finger gleichzeitig das Gerät hält.
Dieses besitzt eine Klemmvorrichtung 29 mit einem Klemmstück 30 welches U-förmig um die Schiene 1 herumgreift (Figur 3) und an einer im Gehäuseteil 13 eingesetzten Schraube 31 aufgehängt ist. Eine Feder 32 drückt das Klemmstück 30 gegen den Kopf 33 der Schraube 31. Der Ring 20 weist einen Arm 35 auf, in dem eine Bolzen 36 aufgenommen ist, welcher durch das Klemmstück 30 hindurch führt und beidseitig durch einen Kopf 43 und eine Mutter 44 gehalten wird. Auf ihm ist, zwischen Hülsen 37 und 38, eine Feder 39 angeordnet, die sich über einen Ring 40 auf den Arm 35 des Ringes 20 abstützt. Der Arm 35 besitzt eine Verlängerung 41, die um die Schiene 1 herumgreift und einen Finger 45 aufweist, welcher dem Kopf 42 des Klemmstückes 30 gegenüber steht.
Auf dem Gehäuse 14 ist eine Anzeigevorrichtung 50 mit einem Anzeigefenster 51 drehbar befestigt. Ueber elektrische Verbindungen wird das Resultat der Ableseeinheit 8 auf die Anzeigevorrichtung 50 übertragen. Durch Drehen der Anzeigevorrichtung 50 und des Anzeigefensters 51 wird ermöglicht, die Anzeige in eine günstige Ableseposition zu bringen. Soll das Mass eines Objektes ermittelt werden, so wird das Längenmessgerät durch Rückzug des Schiebers 5 geöffnet. Dabei greifen einer oder mehrere Finger einer Hand in das Griffloch 10, der Daumen in den Ring 20 ein. Durch Oeffnen der Hand wird der Schieber 5 auf der Schiene 1 zurück bewegt. Das Schliessen des Schiebers 5 erfolgt durch Druck auf den Ring 20 (nach links in Figur 1) und damit, über die Federn 32 und 39, auf den Schieber 5. Diese Federn sind dabei so bemessen, dass ihr Federdruck grösser ist als der Gleitwiderstand des Schiebers 5 auf der Schiene 1, so dass beim Vorschieben keine Relativbewegung des Ringes 20 gegenüber dem Schieber 5 eintritt. Sobald aber das Messobjekt mit den Kontakten 7 in Berührung kommt, werden bei weiterer Zustellung des Ringes 20 die Federn 32 und 39 zusammengedrückt (Figur 5). Sobald eine Federspannung erreicht wird, welche dem gewünschten Messdruck entspricht, presst sich der Arm 35 mit Verlängerung 41 gegen den Kopf 42 des Klemmstückes 30. Dieses wird dadurch auf der Schiene 1 in Schrägstellung festgeklemmt und verhindert so eine weitere Bewegung des Ringes 20. Der Schieber 5, über die Feder 32 auf das Klemmstück 30 abgestützt, kann dem Messdruck nachgeben und sich so dem Messobjekt anpassen.
Wird der Ring 20 losgelassen so wird er unter der Einwirkung der Feder 39 in die strichpunktiert, in Figur 5 angedeutete, Lage zurück geführt. Das Klemmstück 30 bleibt aber, unter der Einwirkung des von der Feder 32 ausgeübten Druckes auf der Schiene 1 festgeklemmt. Erst durch eine weitere Bewegung des Ringes 20 nach rechts in Figur 5 kann es mittels des Bolzens 36 enthemmt und der Schieber 5 wiederum auf der Schiene 1 bewegt werden.
Die in den Figuren 6 und 7 dargestellte Variante unterscheidet sich von der oben beschriebenen Ausführungsform durch eine verschiedenartig ausgebildete Betätigung des Klemmstückes.
Dieses Klemmstück 130 greift ebenfalls U-förmig um die Messschiene und wird vom Ringgriff 120 betätigt. Dieser ist um Gehäuse 114 auf einer Achse 121 in Längsrichtung verschiebbar gelagert und besitzt einen Arm 135 mit einer Verlängerung 141, welche mit dem unteren Teil 142 des Klemmstückes 130 zusammenwirkt.
Der Ringgriff 120 weist weiterhin zwei Anschläge 143 und 144 auf, welche auf das obere Teil des Klemmstückes 130 einwirken. Ein Bolzen 131 ist in einer Aussparung 133 des Gehäuses 114 federn gelagert, wobei eine Feder 132 sich einerseits auf einen Ring 134 des Bolzen 131 und auf eine Einstellschraube 138 abstützt. Die Feder 132 ist somit unter Vorspannung in der Aussparung 133 aufgenommen, wobei die Vorspannung durch Drehen der Einstellschraube 138 verändert werden kann. Der Bolzen 131 wirkt mit dem untersten Ende des Klemmstückes 130 zusammen. Das Gerät umfasst weiterhin eine Feder 136, die zwischen dam oberen Ende des Klemmstückes 130 und dem Gehäuse 114 eingespannt ist. Um die Lage dieser Feder 136 zu sichern, kann in ihr ein nicht dargestellter Stift vorgesehen sein. Es ist zu bemerken, dass die Kraft der Feder 136 sehr viel kleiner ist als die der Feder 132, die die Messkraft bestimmt. Das Gehäuse 114 ist mit einem Anschlag versehen, gegen welches das Klemmstück 130 in frei verschiebarer Lage des Schiebers 5 mittels der Federn 136 und 132 gedrückt wird (Figur 6). In dieser Stellung kann der Schieber 5 frei gleiten, da das Klemmstück 130 senkrecht zur Schiene 1 steht. Sobald aber das Messobjekt mit den Kontakten 7 in Berührung kommt, werden bei weiterer Zustellung des Rings 120 die Federn 132 und 136 zusammengedrückt, wobei die Verlägerung 141 und der Anschlag 144 das Klemmstück 130 berühren. Es ist ersichtlich, dass der Bolzen 131 mit dem benannten unteren Teil 142 an einer wesentlich tieferen Stelle 145 in Berührung tritt wie der Punkt 146, auf welchem die Berührung mit der Verlängerung 141 erfolgt. Es ergibt sich daraus ein Drehmoment, das das Klemmstück 120 bei Erreichen eines vorstimmten Messdruckes in Schrägstellung bringt und dadurch auf der Schiene 1 festklemmt. Bei Loslassen des Ringgriffes 120 bleibt dieses Klemmstück 120 unter der Kraft der Feder 132 in der verriegelten Stellung (Figur 7), in welcher ein Zwischenraum besteht zwischen dem Ring 134 und der hinteren Wand 139 der Aussparung 133. Dieser Zwischenraum erlaubt es, dass der Schieber 5 bei festgeklemmtem Klemmstück 130 verschiebbar angeordnet ist, um sich unter der Federkraft der Feder 132 in die präzise Messlage einspielen zu können. Es ist dazu zu bemerken, dass die Federkraft der Feder 136 sehr schwach bemessen ist, so dass das Klemmstück 130 in der verriegelten Lage bleibt.
Zum Entriegeln des Klemmstückes 130 wird der Ringgriff 120 in Figur 7 nach rechts verschoben so dass er mittels des Anschlags 143 das Klemmstück 130 in eine zur Schiene 1 senkrechte Lage bringt und gegen den Anschlag 137 des Gehäuses 114 drückt. In dieser Lage (Figur 6) ist das Klemmstück 130 in der verschiebbaren Lage durch Federdruck der Federn 136 und 132 gesichert und der Schieber kann sowohl über den Ringgriff 120, wie auch das Gehäuse verschoben werden. Die beschriebene Anordnung bewirkt ein sehr präzises Verriegeln und Entriegeln des Klemmstückes, sowie ein sicheres Verschieben bei entriegeltem Klemmstück.
Eine zweite Variante ist in Figur 8 dargestellt und umfasst ebenfalls eine Schiene 61, einen festen Messschnabel 64, einen Schieber 65 mit einem beweglichen Messschnabel 66 und Messkontakte 67. Auf einem Kopf 68 der Schiene 61 ist eine zur Schiene parallele Führungsleiste 69 mit Schrauben 70 befestigt. Auf ihr verschiebbar befindet sich der Handgriff 71, welcher durch eine Schraube 72 festgeklemmt werden kann. Im Handgriff 71 ist ein Tiefenanschlag 73 gleitend eingelassen, mittels welchem sich das Gerät auf dem Messobjekt 74 abstützt. Durch Schraubelemente 75 wird der Tiefenanschlag 73 in geeigneter Lage auf dem Handgriff 71 festgehalten. Zur Ueberprüfung der Nullage kann der Handgriff 71 in die Ausgangsstellung zurückverschoben werden. In dieser Lage stört der Tiefenanschlag 71 den Schieber 65 nicht, so dass die auf den Schenkeln 64 und 66 angebrachten Messkontakte 67 zu gegenseitiger Berührung gebracht werden können, ohne dass der Tiefenanschlag 73 zurückgestellt werden muss. Es ist ebenfalls möglich, den Tiefenanschlag 73 auf der Schiene 61 oder auf der Führungsleiste 69 in vertikaler und horizontaler Richtung verstellbar anzuordnen. Die Klemmvorrichtung mit Ringgriff kann nach Wunsch gemäss Figur 5 oder 6 ausgeführt sein.
Die Erfindung ist natürlich nicht nur auf die dargestellten Ausführungsbeispiele beschränkt, sondern die letzteren können innerhalb des in den Patentansprüchen defierten Erfindungsgedankens weitere Aenderungen erfahren. Der Ring 20 kann im Gehäuse 14 schwenkbar anstatt verschiebbar angeordnet sein. Die Verbindungsorgane zwischen Ring 20 und Schieber 5 können eine einzige Feder umfassen. Weiterhin könnte das Griffloch 10 des auf der Schiene angeordneten Halteteils für die Einführung des Daumens ausgebildet sein und der auf dem Schieber sich befindende Ringgriff für eine Betätigung durch die anderen Finger ausgestattet sein. Das Gerät könnte auch für Aussen- und Innenmessungen ausgestattet sein, indem auf zwei Seiten des Rings 20 je eine Verlängerung 41 angeordnet wäre.

## Patentansprüche

1. Längenmessgerät bestehend aus einer Schiene (1), auf welcher ein Schieber (5) verstellbar angeordnet ist, wobei die Schiene (1) und der Schieber (5) mit Messschnäbeln (4, 6) versehen sind, und die Schiene (1) mit einem zumindest ein Griffloch (10) aufweisenden Halteteil (9) und der Schieber (5) mit einem Ringgriff (20;120) versehen ist, und wobei der Schieber (5) mit einer auf die Schiene (1) einwirkenden Klemmvorrichtung (29) ausgerüstet ist, und der Ringgriff (20;120) mit der Klemmvorrichtung (29) zu deren Betätigung in Verbindung steht, dadurch gekennzeichnet, dass der Ringgriff (20;120) in einem Gehäuse (14;114) verstellbar angeordnet ist and dass die Klemmvorrichtung (29) ein zwischen Gehäuse (14;114) und Ringgriff (20;120) gelagertes, zumindest zum Teil um die Schiene (1) greifendes Klemmstück (30;130) aufweist, das sich bei Vorschub des Ringgriffes (20;120); und Auftreten einer vorbestimmten Messkraft durch Schrägstellung auf der Schiene (1) festklemmt und das über eine die Messkraft bestimmende Feder (32;132) mit dem Gehäuse (14;114) derart verbunden ist, dass der Schieber (5) bei festgeklemmtem Klemmstück (30;130) verschiebbar angeordnet ist, um sich unter Federkraft in die präzise Messlage einzuspielen.

2. Längenmessgerät gemäss Anspruch 1, dadurch gekennzeichnet, dass die Ringöffnung des Ringgriffes (20;120) mit einer im Gehäuse (14;114) ausgesparten Fingeröffnung übereinstimmt, so dass der bedienende Finger gleichzeitig das Gerät hält.

3. Längenmessgerät gemäss Anspruch 1 oder 2, dadurch gekennzeichnet, dass der Ringgriff (20) eine Achse (21) aufweist, welche beweglich in Lagern (23,24) des Gehäuses (14) aufgenommen ist, oder dass der Ringgriff (120) auf einer Achse (121) des Gehäuses (114) verschiebbar gelagert ist.

4. Längenmessgerät gemäss Anspruch 1, dadurch gekennzeichnet, dass der Federdruck der Feder (32;132) grösser ist als der Gleitwiderstand des Schiebers (5) auf der Schiene (1), so dass nur beim Auftreten einer vorbestimmten Messkraft auf den Messschnabel (6) des Schiebers (5) die Klemmvorrichtung (29) betätigt wird.

5. Längenmessgerät gemäss Anspruch 1, dadurch gekennzeichnet, dass der Ringgriff (20;120) mit einem Arm (41;141) versehen ist, welcher auf das Klemmstück (30;130) so einwirkt, dass er nach einem vorbestimmten Vorschub des Ringgriffs (20;120) gegenüber dem Gehäuse (14;114) den Arm (41;141) auf das Klemmstück (30;130) drückt und dieses in Schräglage auf der Schiene (1) festklemmt.

6. Längenmessgerät gemäss Anspruch 1 oder 4, dadurch gekennzeichnet, dass das Klemmstück (30) an einer im Gehäuse (14) eingesetzten Schraube (31) aufgehängt ist, wobei die die Messkraft bestimmende Feder (32) das Klemmstück (30) gegen den Kopf (33) der Schraube (31) drückt, und wobei in Messlage ein Spiel zwischen Klemmstück (30) und Kopf (33) besteht, welches es erlaubt, dass sich der Schieber unter Druck der Feder (32) in der präzise Messlage einspielen kann.

7. Längenmessgerät gemäss Anspruch 1, dadurch gekennzeichnet, dass es eine zweite Feder (39) aufweist, die zwischen dem Ringgriff (20) und dem Klemmstück (20) angeordnet ist und deren Federdruck grösser ist als der Gleitwiderstand des Schiebers (5) auf der Schiene (1).

8. Längenmessgerät gemäss Anspruch 1, dadurch gekennzeichnet, dass der Ringgriff (20;120) derart mit dem Klemmstück (30;130) über Verbindungsmittel (36;143) verbunden ist, dass eine Rückstellung des Ringgriffes (20;120) eine Befreiung des Klemmstückes (30;130) bewirkt und der Schieber (5) somit auf der Schiene (1) frei verschoben werden kann.

9. Längenmessgerät gemäss Anspruch 1, dadurch gekennzeichnet, dass die die Messkraft bestimmende Feder (132) über einen im Gehäuse (114) gelagerten Bolzen (131) auf einen Teil (142) des Klemmstückes (130) wirkt, der sich auf der vom Ringgriff (120) abgewandten Seite des Klemmstückes (130) befindet.

10. Längenmessgerät gemäss Anspruch 9, dadurch gekennzeichnet, dass der Ringgriff (120) eine Verlängerung (141) aufweist, welche in gegenüber dem Bolzen (131) entgegengesetzter Richtung, in zum Ringgriff hin versetzter Weise auf das benannte Endstück (142) derart wirkt, dass bedingt durch ein auf das Klemmstück (130) wirkendes Drehmoment bei Erreichen eines vorbestimmten Messdruckes das Klemmstück (130) in Schrägstellung auf der Schiene (1) verriegelt wird.

11. Längenmessgerät gemäss Anspruch 10, dadurch gekennzeichnet, dass der Ringgriff (120) einen ersten Anschlag (143) aufweist, der derart angeordnet ist, dass er bei Rückführen des Ringgriffs (120) das Klemmstück (130) entriegelt und in eine merklich senkrechte Lage zur Schiene (1) führt.

12. Längenmessgerät gemäss Anspruch 11, dadurch gekennzeichnet, dass das Gehäuse mit einem zweiten Anschlag (137) versehen ist, gegen welchen das Klemmstück (130) in entriegeltem Zustand merklich senkrecht zu Schiene (1) federnd gedrückt wird.

13. Längenmessgerät gemäss Anspruch 12, dadurch gekennzeichnet, dass es eine zweite Feder (136) von geringer Federkraft wie die Messkraft bestimmende Feder (132) aufweist, welche zweite Feder (136) derart zwischen dem Gehäuse (114) und dem Klemmstück (130) angeordnet ist, dass sie das Klemmstück (130) in entriegeltem Zustand gegen den zweiten Anschlag (137) drückt.

14. Längenmessgerät gemäss Anspruch 1, dadurch gekennzeichnet, dass der das Griffloch (10) aufweisende Halteteil (9;71) auf der Schiene (1) oder auf einer zur Schiene (1) parallel befestigten Führungsleiste (69) verstellbar angeordnet ist.

15. Längenmessgerät gemäss Anspruch 1 oder 14, dadurch gekennzeichnet, dass es einen Tiefenanschlag (65) aufweist, welcher auf dem Halteteil (9;71), auf der Schiene (1) oder auf der Führungsleiste (69) verstellbar angeordnet ist und mittels welchem das Gerät auf ein Messobjekt (74) abgestützt werden kann.

16. Längenmessgerät gemäss Anspruch 1, dadurch gekennzeichnet, dass der Schieber(5) Anzeigemittel (50,51) zur Anzeige des Messresultates aufweist, wobei diese Anzeigemittel (50,51) drehbar auf dem Schieber (5) angeordnet sind.
